(19) Europäisches Patentamt
European Patent Office
Office européen des brevets

(11) Numéro de publication: **0 327 773 B1**

(12) **FASCICULE DE BREVET EUROPEEN**

(45) Date de publication de fascicule du brevet: **02.11.94**

(51) Int. Cl.⁵: **C08G 77/54**, C04B 35/58, C04B 35/00

(21) Numéro de dépôt: **88403263.2**

(22) Date de dépôt: **21.12.88**

(54) **Polysiloxazanes, leur procédé de préparation et leur utilisation comme précurseurs de céramiques.**

(30) Priorité: **28.12.87 FR 8718215**

(43) Date de publication de la demande:
**16.08.89 Bulletin 89/33**

(45) Mention de la délivrance du brevet:
**02.11.94 Bulletin 94/44**

(84) Etats contractants désignés:
**AT BE CH DE ES FR GB GR IT LI LU NL SE**

(56) Documents cités:
**EP-A- 0 237 199**
**WO-A-86/06377**
**US-A- 3 853 567**
**US-A- 4 612 383**

(73) Titulaire: **ELF ATOCHEM S.A.**
**4 & 8, Cours Michelet**
**La Défense 10**
**F-92800 Puteaux (FR)**

(72) Inventeur: **Colombier, Christian**
**19, Place Tolozan**
**F-69001 Lyon (FR)**
Inventeur: **Cuer, Jean-Pierre**
**29, Rue de Bochu**
**F-69340 Francheville le Haut (FR)**

(74) Mandataire: **Rochet, Michel et al**
**ELF ATOCHEM S.A.**
**Département Propriété Industrielle**
**4-8, Cours Michelet**
**La Défense 10 - Cedex 42**
**F-92091 Paris-La-Défense (FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne de nouveaux polysiloxazanes, leur procédé de préparation, leurs applications, notamment en tant que précurseurs de céramiques et les céramiques résultant de leur pyrolyse.

Les expressions polysilazanes, organopolysilazanes, polymères de silazanes ou résines de carbosilazanes que l'on rencontre dans la littérature sont généralement utilisées pour désigner des substances polymériques, solides ou liquides plus ou moins visqueuses renfermant une pluralité de motifs -NR-Si-. Le terme polysiloxazane est utilisé de préférence lorsque l'enchaînement macro moléculaire contient en outre de l'oxygène. De telles substances polymériques peuvent être mises en forme et converties par pyrolyse en articles, habituellement appelés céramiques renfermant Si, N et C, et le cas échéant O, le plus souvent sous forme de carbure, nitrures ou carbonitrures de silicium.

Diverses techniques ont été proposées pour préparer les polysilazanes précités. En particulier on a proposé (brevet US 3.853.567 de Wolfgang Verbeek) de faire réagir un halogénosilane avec une amine. Selon ce brevet, l'halogénosilane peut être choisi parmi les différents silanes mono- ou polysubstitués par des atomes d'halogène et notamment de chlore, les éventuelles valences libres du silicium pouvant être substituées par des groupements alkyle ou aryle. Les amines peuvent quant à elles être choisies parmi les composés portant un ou plusieurs groupes $NH_2$ ou NH, ces composés pouvant être par exemple des amines primaires ou secondaires, des amides, des hydrazines ou hydrazides ou, dans le cas d'halogénosilanes contenant du carbone, de l'ammoniac. Il convient de noter dans ce brevet que les bases organiques utilisées de préférence sont précisément celles qui ne contiennent pas un atome d'oxygène dans la molécule, et plus spécialement les composés exclusivement constitués d'azote, d'hydrogène tels que l'ammoniac. L'utilisation d'ammoniac anhydre est également recommandée dans le brevet US 4.482.669.

Cette réaction d'un halogénosilane avec un composé constitué exclusivement d'azote, d'hydrogène et éventuellement de carbone, a été effectuée, selon la littérature, soit en phase vapeur, soit en milieu solvant (voir par exemple US 4.397.828 Col. 1 lignes 23-26, lignes 49-53 ; US 2.564.674 ou le brevet US 3.853.567 cité précédemment).

Or on sait que l'un des problèmes posés par la préparation des polysilazanes réside dans le contrôle de la viscosité, de la masse moléculaire et de la structure de ces polymères et la technique proposée par Verbeek par exemple ne permet pas toujours d'assurer correctement ce contrôle (voir par exemple le brevet US 4.310.651).

Par ailleurs, les brevets français 2.584.080, 2.584.079 et américain 4.482.669 proposent des traitements catalytiques ou thermiques d'ammonolysats de chlorosilanes, de façon à augmenter la viscosité du silazane et également le rendement en produit minéral obtenu par pyrolyse du silazane.

Certains documents font état de synthèses de matière céramique contenant une part importante d'oxynitrure de silicium par pyrolyse d'un précurseur organométallique. En particulier, le brevet EP 0167230 montre bien comment une teneur optimale en oxygène dans la céramique permet d'inhiber la cristallisation de celle-ci et donc d'améliorer les propriétés mécaniques à haute température (1200 °C et plus).

Les brevets EP 161828, EP 181208 et EP 162596 illustrent également l'intérêt des céramiques partiellement oxydées.

Un autre avantage de ces céramiques est également une plus grande résistance à l'oxydation par l'air à haute température. Dans les brevets précités, l'introduction de l'oxygène dans le précurseur se fait par l'ajout d'une poudre d'oxyde, par exemple de silice, ou par l'action d'air humide sur le précurseur déjà mis en forme. Ce dernier traitement est destiné à produire une réticulation en surface de l'article de façon à lui donner de la rigidité dans la forme souhaitée avant pyrolyse.

Si la famille des siloxazanes est connue depuis longtemps, il s'agit principalement de produits réalisés par ammonolyse et hydrolyse de chlorosilanes. Récemment, il a été proposé (Yuan-Fu YU et Tai Il MAH-Mat. Res. Soc. Sym. Proc. Vol. 73, 1986 559-65) d'utiliser un siloxazane obtenu par "hybridation" catalytique d'un mélange de siloxanes et de silazanes comme précurseurs de céramique siliciée partiellement oxydée, par exemple de $Si_2N_2O$.

Par ailleurs, Wannagat (Z.Anorg. Allg. Chem. 1971 385(3) 261-70) a décrit la synthèse de molécules présentant à la fois les enchaînements -Si-O- et -Si-N-N-. Ces molécules étaient cependant réalisées par co-réaction de mélanges de $ClMe_2SiNMeSiMe_2Cl$ et de $ClMe_2SiOSiMe_2Cl$ sur l'hydrazine ou la méthylhydrazine. Ces molécules, de faible poids moléculaire (M < 350), n'ont de plus jamais été proposées comme précurseurs de céramique.

Dans la demande de brevet européen 0237199, on propose des polysiloxazanes comprenant des motifs

$$-[(SiH_2)_n NH]- \text{ et } -[(SiH_2)_m O]- ,$$

obtenus par réaction d'un dihalosilane ou d'un adduct avec une base de Lewis avec de l'ammoniac et de l'eau et/ou de l'oxygène. Selon ce document, on peut ajouter à l'ammoniac de l'hydrazine, conduisant à la présence de motifs supplémentaires

$$-[(SiH_2)_r NH-NH]- .$$

WO-A-86/06 377 divulgue la réaction de $[H(CH_3)_2Si]_2O$ avec $NH_3$. Il se forme un polymère comprenant des motifs de formule $[-Si(R)_2-NH-Si(R_2)-O-]$. Dans cette réaction on peut utiliser $NH_2-NH_2$ et ses dérivés au lieu de $NH_3$.

L'invention propose de nouveaux polysiloxazanes pouvant être pyrolysés en céramique contenant Si, N, O et éventuellement C à une température d'au moins 700 °C.

Un autre objet de l'invention concerne une technique de préparation de polysiloxazanes, technique permettant de contrôler efficacement la viscosité desdits polysiloxazanes.

Un autre objet de l'invention concerne une technique de préparation de céramiques, technique permettant de contrôler efficacement la composition de la céramique et en particulier de sa teneur en oxygène.

Un autre objet de l'invention concerne une technique conduisant par pyrolyse à un rendement élevé en céramique (parfois appelée produit minéral).

D'autres avantages de l'invention apparaîtront à la lecture de l'exposé qui suit.

L'invention concerne donc en premier lieu des polysiloxazanes, ces polymères étant caractérisés en ce qu'ils comprennent des motifs de formule :

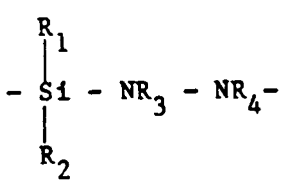 et/ou 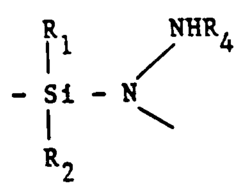 (I)

associés à des motifs de formule :

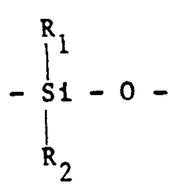 (II)

et éventuellement à des motifs de formule :

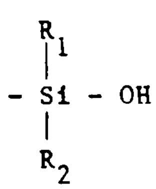 (III)

et éventuellement à des motifs de formule :

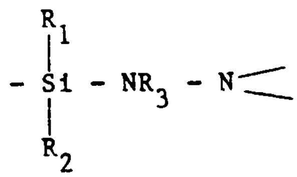

(IV)

formules dans lesquelles les radicaux $R_1$ et $R_2$, $R_3$ et $R_4$, qui peuvent être identiques ou différents, peuvent représenter un atome d'hydrogène, un radical hydrocarboné aliphatique saturé ou insaturé ou un radical aryle mono- ou polycylique, alkylaryle ou arylalkyle sous réserve que $R_1$ et $R_2$ ne représentent pas simultanément un atome d'hydrogène, en ce qu'ils présentent une masse moléculaire supérieure à 350 et en ce que le rapport du nombre de motifs de formule (I) au nombre de motifs de formule (II) est supérieur à 1.

L'invention concerne plus spécialement des polysiloxazanes présentant les motifs indiqués ci-avant et ayant une masse moléculaire moyenne pouvant être comprise entre 400 et 50.000, et de préférence entre 400 et 10.000.

L'invention concerne également un procédé de préparation des polysiloxazanes comprenant les motifs I et II et/ou III et éventuellement IV, ledit procédé étant caractérisé en ce qu'il consiste à faire réagir :

. au moins un halogénosilane de formule :

$(R_1)_a(R_2)_bSi(Y)_{4-(a+b)}$ (V)

. avec au moins une hydrazine de formule :

$NHR_3\text{-}NHR_4$ (VI)

formules dans lesquelles les symboles $R_1$, $R_2$ ainsi que $R_3$ et $R_4$ ont les significations données précédemment, Y représente un atome d'halogène et notamment de chlore et (a+b) représente un nombre compris entre 0 et 3 inclus et, de préférence, environ 2,

. et avec de l'eau

L'invention concerne également les articles conformés en céramique, obtenus après mise en forme et pyrolyse des polysiloxazanes précités. Ces articles, qui peuvent se présenter sous forme de fibres, filaments, poudres, films, revêtements, paillettes, enduits, mousses ou articles tissés, non tissés ou matériaux composites en dérivant, peuvent être transformés en céramique par chauffage desdits polysiloxazanes à une température d'au moins 700 °C. Ces articles céramiques contiennent les proportions suivantes d'éléments (en poids) :

- 30 à 70 % de Si
- 2 à 30 % de N
- 1 à 25 % de O
- 0 à 35 % de C

A titre d'exemples spécifiques des radicaux représentés par les symboles $R_1$, $R_2$, $R_3$ et $R_4$ dans les formules précédentes, on citera en particulier, outre l'hydrogène, les radicaux hydrocarbonés aliphatiques saturés renfermant de 1 à 8 atomes de carbone, tels que les radicaux méthyle, éthyle, propyle, butyle, pentyle, hexyle, heptyle ou octyle ; Les radicaux insaturés tels que vinyle, allyle ; les radicaux alicycliques renfermant de 3 à 7 atomes de carbone tels que les radicaux cyclopropyle, cyclobutyle, cyclopentyle, cyclohexyle ou cycloheptyle ; les radicaux phényle, benzyle, phényléthyle, tolyle, xylyle ou naphtyle.

D'une manière préférentielle, les radicaux $R_1$ et $R_2$ représentent H ou des radicaux méthyle, éthyle, vinyle ou phényle, les radicaux $R_3$ et $R_4$ représentant un atome d'hydrogène.

A titre d'exemples spécifiques des halogénosilanes de formule V, ou citera notamment les produits répondant aux formules suivantes :

$SiCl_4$, $(CH_3)_2SiCl_2$ , $(CH_3)_3SiCl$
$CH_3SiCl_3$, $(C_6H_5)_2SiCl_2$, $(C_6H_5)(CH_3)SiCl_2$
$(C_6H_5)SiCl_3$, $(CH_3)(CH_3CH_2)SiCl_2$,
$(CH_3)_2HSiCl$, $HSiCl_3$
$CH_3(CH_2=CH)SiCl_2$, $(CH_3)_2(CH_2=CH)SiCl$
et $(CH_3)HSiCl_2$

Il ressort de la signification donnée à titre préférentiel pour (a + b) qu'on utilise avantageusement dans l'invention un ou plusieurs dihalogénosilanes ou un mélange comprenant un ou des dihalogénosilanes et un mono- ou un trihalogénosilane et/ou $SiCl_4$. Le pourcentage d'atomes de chlore apportés par le trihalogénosilane dans le mélange avec le dihalogénosilane n'excède de préférence pas 70 %. Dans le cas de monohalogénosilane ou de $SiCl_4$, ce pourcentage n'excède de préférence pas 30 %.

A titre d'exemples spécifiques des hydrazines de formule VI on citera notamment l'hydrazine non substituée ($N_2H_4$), la méthylhydrazine, l'éthylhydrazine, la phénylhydrazine, la cyclohexylhydrazine, la diméthyl-1,2 hydrazine, la diéthyl-1,2 hydrazine, la diphényl-1,2 hydrazine, la dibenzyl-1,2 hydrazine, l'$\alpha$-naphtylhydrazine, la diisopropyl-1,2 hydrazine, les ditolyl-1,2 hydrazines, la di-isobutyl-1,2 hydrazine, la (diméthyl-2,3 phényl) hydrazine, la di($\alpha$-naphtyl)-1,2 hydrazine.

On peut utiliser dans l'invention un mélange comprenant plusieurs hydrazines et notamment plusieurs des produits spécifiquement cités. On utilise avantageusement l'hydrazine $N_2H_4$.

Dans la mise en oeuvre du procédé conforme à l'invention on utilise avantageusement l'hydrazine (VI) et l'eau en quantités telles que le nombre de moles d'eau additionné au nombre de moles d'hydrazine soit supérieur au nombre de moles d'atomes d'halogène Y additionné au nombre de moles d'atomes de silicium. Cet excès peut atteindre par exemple 20 %. Par ailleurs, il est souhaitable d'utiliser un nombre de moles d'eau inférieur à la moitié du nombre de moles d'atomes de silicium.

La réaction précitée est avantageusement conduite en présence d'une amine tertiaire telle que la triéthylamine, la triméthylamine, la triphénylamine ou la pyridine.

Cette amine a pour rôle principal de limiter la formation d'halogénohydrate d'hydrazine par la formation d'un halogénohydrate de cette amine.

D'une manière générale la quantité d'amine est d'au moins une molécule d'amine par atome d'halogène Y. De préférence, ce taux est excèdentaire, par exemple de 20 %. Lorsqu'on utilise une amine le nombre de moles d'hydrazine additionné au nombre de moles d'eau peut être supérieur au seul nombre de moles d'atomes de silicium. Dans cette même hypothèse, on utilisera avantageusement 0,05 à 1 mole d'eau par mole d'hydrazine (VI).

Si on utilise un excès d'halogénosilane au sens entendu ci-dessus, il est avantageux, après avoir fait réagir l'hydrazine, l'eau et le ou les halogénosilanes, de procéder à l'introduction d'un excès d'un réactif permettant d'éliminer cet halogénosilane du produit final, ce réactif pouvant être d'une manière générale une amine ou l'ammoniac par exemple.

L'eau peut être introduite de différentes manières : elle peut être présente sous forme d'hydrate d'hydrazine, ou être mélangée à l'hydrazine anhydre avant la réaction. Enfin, elle peut être introduite séparément de l'hydrazine, simultanément ou non.

Le procédé conforme à l'invention est avantageusement conduit en atmosphère inerte, par exemple sous courant d'azote.

La température est généralement comprise entre - 10 et 100 °C. On peut mettre en oeuvre les seuls réactifs précités (halogénosilane, hydrazine et eau), le cas échéant additionnés de l'amine tertiaire. Préférentiellement on peut faire appel à un solvant du polysiloxazane final, pouvant notamment être choisi parmi les hydrocarbures aliphatiques ou aromatiques, éventuellement halogénés tels que le toluène, le chlorure de méthylène, le benzène, le xylène, l'hexane, ou les ethers tels que l'ether isopropylique, l'éther diéthylique.

La réaction peut être conduite à pression atmosphérique, sous pression ou sous pression réduite. On opère de préférence à pression atmosphérique.

A l'issue de la réaction, dont la durée peut être comprise entre quelques disaines de minutes et quelques heures, on élimine les halogénohydrates, par exemple par filtration sous pression réduite ou sous pression d'azote, et élimine le solvant éventuellement utilisé et l'excès d'hydrazine ou d'amine tertiaire, par exemple par évaporation sous pression réduite. On recueille ainsi les polysiloxazanes conformes à l'invention sous forme de solides, rigides ou gommeux, ou d'huile plus ou moins visqueuse, en fonction notamment de la teneur en motifs de formule II ou III.

Les polysiloxazanes peuvent ensuite être mis en forme éventuellement après chauffage à une température pouvant être comprise entre environ 25 °C et 300 °C, par exemple par filage au travers de filières de dimensions appropriées pour obtenir des filaments ayant un diamètre pouvant être compris entre 1 et 50 $\mu$m, par laminage du polymère pour former un film dont l'épaisseur peut aller de 10 à 100 $\mu$m.

On peut également former, à partir de solutions desdits polysiloxazanes des revêtements sur des supports tels que métaux (silicium métallique, acier, alliages riches en nickel), ou céramiques, l'épaisseur desdits revêtements pouvant par exemple être de l'ordre de 0,5 à 100 $\mu$m. Dans le cas où le revêtement contient un additif tel que poudres de carbure ou nitrure de silicium, cette épaisseur peut atteindre plusieurs millimètres.

Les polysiloxazanes mis en forme peuvent ensuite être pyrolysés par chauffage à une température de 700 °C ou supérieure, par exemple jusqu'à 1400 °C, en céramique contenant Si, N, O et éventuellement C.

La pyrolyse peut être conduite en atmosphère neutre, c'est-à-dire sous azote ou argon, ou en atmosphère d'ammoniac si l'on veut faire baisser la teneur en carbone de la céramique et même l'éliminer.

Les polysiloxazanes conformes à l'Invention peuvent être obtenus avec des rendements élevés et peuvent eux-mêmes conduire à des céramiques avec des rendements pouvant atteindre, voire dépasser 50 %. Le procédé de préparation de ces polysiloxazanes permet de contrôler la teneur des produits en motifs de formules II et III et par conséquent la teneur en oxygène de la céramique résultant de la pyrolyse de ces précurseurs.

Dans ces exemples, les valeurs de rendements en céramique (= poids de céramique obtenue/poids de précurseur engagé X 100) ont été mesurées par analyse thermogravimétrique sans confinement et sous balayage d'azote. La montée en température était de 100 °C/heure et était suivie d'un palier d'une heure de 1000 °C, température maximale.

Dans les exemples 1 à 3 le rapport nombre de moles d'eau/nombre de moles d'hydrazine est respectivement de 0,4, 0,167 et 0 mais la somme des nombres de moles d'eau et de moles d'hydrazine reste constante et égale à 1,4. On a ainsi fait varier le nombre relatif des motifs (I) et (II) pour une même quantité de chlorosilane (1 mole) engagée.

## EXEMPLE 1

La réaction a lieu dans un réacteur double enveloppe équipé d'un thermomètre, d'un système d'agitation, d'un condenseur (15 °C) et d'une arrivée d'azote. Après purge du'réacteur à l'azote, on y verse à 15 °C 600 ml de toluène, 3 moles de triéthylamine et 1 mole de $CH_3$ Si $HCl_2$. Le réacteur étant agité et refroidi par de l'eau à 15 °C, on y verse à débit constant, en 30 min (mn), un mélange contenant 1 mole d'hydrazine et 0,4 mole d'eau. Après cette coulée, on porte la température du réacteur à 60 °C pendant 6 heures et enfin, sous faible agitation, à 15 °C pendant 15 heures. On élimine le précipité par filtration sous pression d'azote et recueille la solution claire. Le solvant et les restes de réactifs volatils sont éliminés à l'aide d'un évaporateur rotatif à 60 °C sous pression progressivement réduite de $2.10^4$ Pa (150 mm de mercure) jusqu'à 66,7 Pa (0,5 mm de mercure) en fin d'évaporation. On recueille enfin 56 g d'une huile visqueuse, ce qui correspond à un rendement de 82 % de la théorie fondée sur la formation des motifs (I) et (II).

Le précipité est séché sous azote a 60 °C a l'étuve sous pression réduite à $6{,}67.10^3$ Pa (50 mm de mercure). Par pesée ou détermine un poids de 240,6 g. ce qui correspond a un rendement de 87,5 % de la théorie fondée sur la formation de chlorhydrate de triéthylamine.

L'analyse infra-rouge du précipité confirme qu'il s'agit de chlorhydrate de triéthylamine.

Le polysiloxazane obtenu comporte une pluralité de motifs de formules :

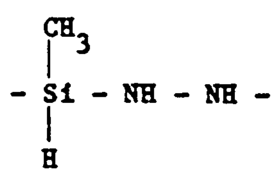 , 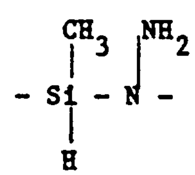 et 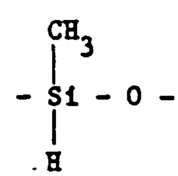

L'analyse infra-rouge est en accord avec les structures proposées :

3358 $cm^{-1}$ ($\nu$NH), 3265,1 $cm^{-1}$ ($\nu NH_2$), 2963,7 $cm^{-1}$ et 2904,7 $cm^{-1}$ ($\nu$CH), 2160,9 $cm^{-1}$ ($\nu$SiH), 1583,9 $cm^{-1}$ ($\delta NH_2$), 1406,1 $cm^{-1}$ ($\delta CH_3$), 1258,6 $cm^{-1}$ ($\delta SiCH_3$).

On remarque en particulier que' les bandes $\nu$ Si - N et $\nu$ Si - O se recouvrent pour donner une bande large de 950 à 1200 $cm^{-1}$ avec un maximum à 1047 $cm^{-1}$.

Autres bandes : 880 $cm^{-1}$, 797 $cm^{-1}$ et 767,2 $cm^{-1}$.

Ce polysiloxazane présente une masse moléculaire moyenne d'environ 1000.

Par analyse thermogravimétrique, ou détermine un rendement en céramique de 62 %.

La céramique contient en poids :

- environ 51,2 % de Si
- environ 19,1 % de N
- environ 14 % de C
- environ 15,3 % de O

EXEMPLE 2

On procède exactement comme pour l'exemple 1, mais avec un mélange contenant 1,2 mole d'hydrazine et 0,2 mole d'eau. On recueille 54,3 g d'une huile visqueuse (rendement = 76,3 %). Le précipité séché a une masse de 225,6 g (rendement = 82 %). Sur le spectre infra-rouge on voit que les bandes ν Si - N et ν Si - O se recouvrent pour donner une bande large de 950 à 1200 $cm^{-1}$ avec un maximum à 1025 $cm^{-1}$. La bande ν Si - H présente un maximum à 2154 $cm^{-1}$. Ce polysiloxazane présente une masse moléculaire moyenne d'environ 1000.

Par analyse thermogravimétrique, on détermine un rendement en céramique de 61 %.

La céramique contient en poids :

- environ 52,5 % de Si
- environ 26,6 % de N
- environ 13,6 % de C
- environ 5,8 % de O

EXEMPLE 3 (Comparatif)

On procède exactement comme pour les exemples 1 et 2 mais avec 1,4 mole d'hydrazine et en l'absence d'eau. On recueille 56 g d'un produit gommeux (rendement environ 75,7 %) et 225 g de précipité (rendement environ 81,8 %).

Le spectre infra-rouge du polysilazane montre une bande ν SiN assez fine de 950 à 1100 $cm^{-1}$ avec un maximum à 988 $cm^{-1}$. La bande ν SiH présente un maximum à 2125 $cm^{-1}$. Ce polysilazane présente une masse moléculaire moyenne d'environ 1000.

Par analyse thermogravimétrique, on détermine un rendement en céramique de 64 %.

La céramique contient en poids :

- environ 54,1 % de Si
- environ 29,9 % de N
- environ 13,5 % de C
- environ 0,4 % de O

Dans les exemples 4 à 6 le rapport nombre de moles d'eau/nombre de moles d'hydrazine est respectivement de 0,35, 0,15 et 0 mais la somme nombre de moles d'eau + nombre de moles d'hydrazine reste constante et égale à 1. La somme des nombres de moles de $SiHCH_3Cl_2$ et de $Si(CH_3)_2Cl_2$ reste également constante et égale à 1.

EXEMPLE 4

On opère avec le même appareillage que pour l'exemple 1. Le réacteur étant refroidi à 15°C, on engage 600 ml de toluène, 0,65 mole de $SiHCH_3Cl_2$, 0,35 mole de $Si(CH_3)_2Cl_2$ et 2,4 moles de triéthylamine. On ajoute sous agitation un mélange contenant 0,74 mole d'hydrazine et 0,26 mole d'eau en 30 min à débit constant. On élève ensuite la température du réacteur à 60°C pendant 6 heures. On envoie alors à travers la bouillie 0,5 mole d'ammoniac pur avec un débit constant de 20 l/h.

On ramène ensuite la température du réacteur à 15°C et on laisse reposer la bouillie 15 h sous faible agitation. On filtre de précipité (215 g déterminé après séchage) sous pression d'azote et on procède à l'évaporation du solvant et des restes de réactifs comme décrit à l'exemple 1. On recueille 54,5 g d'un liquide très fluide.

Sur le spectre infra-rouge, les bandes ν Si-N et ν Si-O se recouvrent pour donner une seule bande large de 950 à 1200 $cm^{-1}$ avec un maximum à 1044 $cm^{-1}$. La bande ν SiH présente son maximum à 2129 $cm^{-1}$.

Par analyse thermogravimétrique, on détermine un rendement en céramique de 47 %.

La céramique contient en poids :

- environ 52,5 % de Si
- environ 22,7 % de N
- environ 15,1 % de C
- environ 9,2 % de O

Ce polysiloxazane présente une masse moléculaire moyenne d'environ 1000.

EXEMPLE 5

On procède exactement comme dans l'exemple 4 mais avec un mélange de 0,87 mole d'hydrazine et de 0,13 mole d'eau. On recueille après évaporation 56 g de polysiloxazane et l'on pèse 222 g de précipité après séchage.

Sur le spectre infra-rouge, on constate que des bandes ν Si-N et ν Si-O se recouvrent en une seule bande de 950 à 1200 $cm^{-1}$ avec un maximum à 1030 $cm^{-1}$.

La bande ν SiH présente son maximum à 2143 $cm^{-1}$.

Par analyse thermogravimétrique, on détermine un rendement en céramique de 50,3 %.

La céramique contient en poids :

- environ 53 % de Si
- environ 26,1 % de N
- environ 14,8 % de C
- environ 6 % de O

Ce polysiloxazane présente une masse moléculaire moyenne de 1000 environ.

EXEMPLE 6 (Comparatif)

On procède exactement comme dans l'exemple 4 mais avec 1 mole d'hydrazine mais en l'absence d'eau. On recueille après évaporation 54,5 g de polysilazane et d'on pèse 208 g de précipité sec.

Sur de spectre infra-rouge, on observe une bande ν SiN assez fine avec un maximum à 994 $cm^{-1}$ et l'absence de bande ν Si - O.

La bande ν SiH présente son maximum à 2129 $cm^{-1}$.

Par analyse thermogravimétrique, on détermine un rendement en céramique de 53,4 %.

La céramique contient en poids :

- environ 53,7 % de Si
- environ 28,9 % de N
- environ 14,6 % de C
- environ 0,3 % de O

Ce polysilazane présente une masse moléculaire moyenne de 1000 environ.

EXEMPLE 7

On procède exactement comme pour l'exemple 4 mais avec 1 mole de $SiCH_3(CH=CH_2)Cl_2$ et un mélange hydrazine/eau constitué de 0,87 mole d'hydrazine et 0,13 mole d'eau. On recueille 76,6 g d'une huile assez fluide. Ce polysiloxazane présente un rendement en céramique de 60 %.

La céramique contient en poids :

- environ 44,3 % de Si
- environ 19,1 % de N
- environ 28,7 % de C
- environ 5,1 % de O

**Revendications**

**1.** Polysiloxazanes comprenant des motifs de formule :

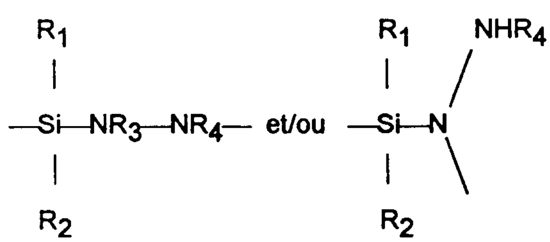

et/ou

(I)

associés à des motifs de formule :

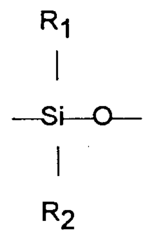

(II)

et éventuellement à des motifs de formule :

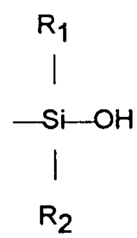

(III)

et éventuellement à des motifs de formule :

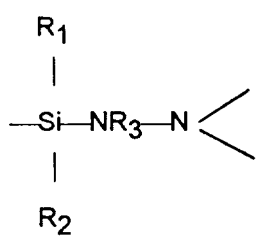

(IV)

formules dans lesquelles les radicaux $R_1$ et $R_2$, $R_3$ et $R_4$, qui peuvent être identiques ou différents, peuvent représenter un atome d'hydrogène, un radical hydrocarboné aliphatique saturé ou insaturé, ou un radical aryle mono- ou polycyclique, alkylaryle ou arylalkyle sous réserve que $R_1$ et $R_2$ ne représentent pas simultanément un atome d'hydrogène et en ce qu'ils représentent une masse moléculaire supérieure à 350, caractérisés en ce que le rapport du nombre de motifs de formule (I) au nombre de motifs de formule (II) est supérieur à 1.

**2.** Polysiloxazanes selon la revendication 1, caractérisés en ce que leur masse moléculaire est comprise entre 400 et 50.000 et de préférence entre 400 et 10.000.

**3.** Polysiloxazanes selon l'une quelconque des revendications 1 ou 2, caractérisés en ce que les symboles $R_1$, $R_2$, $R_3$ et $R_4$ représentent un radical choisi dans le groupe constitué par les radicaux hydrocarbonés aliphatiques saturés renfermant de 1 à 8 atomes de carbone, tels que les radicaux méthyle, éthyle, propyle, butyle, pentyle, hexyle, heptyle ou octyle ; les radicaux insaturés tels que vinyle ou allyle ; les radicaux alicycliques renfermant de 3 à 7 atomes de carbone tels que les radicaux cyclopropyle, cyclobutyle, cyclopentyle, cyclohexyle ou cycloheptyle ; les radicaux phényle, benzyle, phényléthyle, tolyle, xylyle ou naphtyle.

**4.** Polysiloxazanes selon l'une quelconque des revendications 1 à 3, caractérisés en ce que les radicaux $R_1$ et $R_2$ représentent un atome d'hydrogène ou un radical méthyle, éthyle, vinyle ou phényle, et les radicaux $R_3$ et $R_4$ représentent un atome d'hydrogène.

**5.** Procédé de préparation des polysiloxazanes selon l'une quelconque des revendications 1 à 4, caractérisé en ce qu'il consiste à faire réagir :

- au moins un halogénosilane de formule :

$(R_1)_a(R_2)_bSi(Y)_{4-(a+b)}$ (V)

- avec au moins une hydrazine de formule :

$NHR_3—NHR_4$ (VI)

formules dans lesquelles les symboles $R_1$, $R_2$ ainsi que $R_3$ et $R_4$ ont les significations données dans la revendication 1, Y représente un atome d'halogène et notamment de chlore et (a + b) représente un nombre compris entre 0 et 3 inclus et, de préférence, environ 2.

- et avec de l'eau.

**6.** Procédé selon la revendication 5, caractérisé en ce que l'halogénosilane est choisi dans le groupe constitué par les produits de formules :
$SiCl_4$, $(CH_3)_2SiCl_2$, $(CH_3)_3SiCl$
$CH_3SiCl_3$, $(C_6H_5)_2SiCl_2$, $(C_6H_5)(CH_3)SiCl_2$
$(C_6H_5)SiCl_3$, $(CH_3)(CH_3CH_2)SiCl_2$
$(CH_3)_2HSiCl$,$HSiCl_3$
$CH_3(CH_2=CH)SiCl_2$, $(CH_3)_2(CH_2=CH)SiCl$
$(CH_3)HSiCl_2$

**7.** Procédé selon l'une quelconque des revendications 5 ou 6, caractérisé en ce que l'hydrazine est choisie dans le groupe constitué par l'hydrazine non substituée ($N_2H_4$), la méthylhydrazine, l'éthylhydrazine, la phénylhydrazine, la cyclohexylhydrazine, la diméthyl-1,2 hydrazine, la diéthyl - 1,2 hydrazine, la diphényl - 1,2 hydrazine, la dibenzyl - 1,2 hydrazine, l'$\alpha$-naphtylhydrazine, la di-isopropyl - 1,2 hydrazine, les ditolyl - 1,2 hydrazines, la di-isobutyl-1,2 hydrazine, la (diméthyl-2,3 phényl) hydrazine, la di($\alpha$-naphtyl)-1,2 hydrazine.

**8.** Procédé selon l'une quelconque des revendications 5 à 7, caractérisé en ce que l'hydrazine VI et l'eau sont mises en oeuvre en quantités telles que le nombre de moles d'eau additionné au nombre de moles d'hydrazine soit supérieur au nombre de moles d'atomes d'halogène Y additionné au nombre de moles d'atomes de silicium.

**9.** Procédé selon l'une quelconque des revendications 5 à 8, caractérisé en ce que la réaction est effectuée en présence d'une amine tertiaire.

**10.** Procédé selon la revendication 9, caractérisé en ce que la quantité d'amine est d'au moins une molécule d'amine par atome d'halogène Y et en ce que le nombre de moles d'hydrazine additionné au nombre de moles d'eau peut être supérieur au seul nombre de moles d'atomes de silicium.

**11.** Procédé selon la revendication 10, caractérisé en ce qu'on utilise 0,05 à 1 mole d'eau par mole d'hydrazine VI.

**12.** Procédé selon l'une quelconque des revendications 9 à 11, caractérisé en ce que l'amine tertiaire est choisie dans le groupe constitué par la triéthylamine, la triméthylamine, la triphénylamine et la pyridine.

**13.** Polysiloxazanes selon l'une quelconque des revendications 1 à 4, caractérisés en ce qu'ils se trouvent sous forme d'articles conformés tels que fibres, filaments, poudres, films, revêtements, paillettes, conduits, mousses ou articles tissés, non tissés ou matériaux composites.

**14.** Procédé de fabrication d'articles en céramique caractérisé en ce qu'il consiste à pyrolyser à une température d'au moins 700 ° C un polysiloxazane selon la revendication 13.

## Claims

**1.** Polysiloxazanes comprising units of formula:

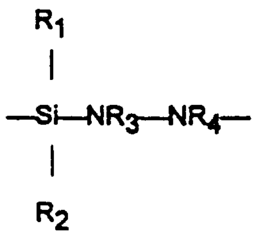

and/or

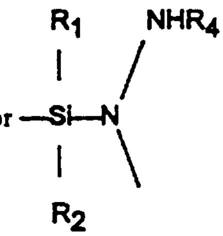

(I)

in combination with units of formula:

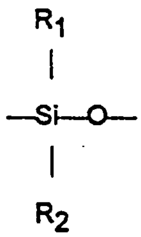

(II)

and optionally with units of formula:

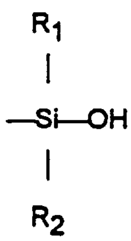

(III)

and optionally with units of formula:

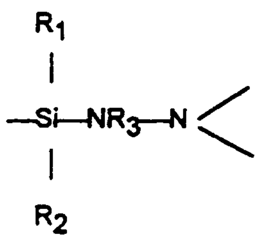

(IV)

in which formulae the $R_1$ and $R_2$, $R_3$ and $R_4$ radicals, which can be identical or different, can represent a hydrogen atom, a saturated or unsaturated aliphatic hydrocarbon radical or an arylalkyl, alkylaryl or a mono- or polycyclic aryl radical, with the proviso that $R_1$ and $R_2$ do not simultaneously represent a hydrogen atom and in that they represent a molecular mass greater than 350, characterized in that the ratio of the number of units of formula (I) to the number of units of formula (II) is greater than 1.

**2.** Polysiloxazanes according to Claim 1, characterized in that their molecular mass is between 400 and 50,000 and preferably between 400 and 10,000.

3. Polysiloxazanes according to either of Claims 1 and 2, characterized in that the $R_1$, $R_2$, $R_3$ and $R_4$ symbols represent a radical chosen from the group consisting of saturated aliphatic hydrocarbon radicals containing from 1 to 8 carbon atoms, such as methyl, ethyl, propyl, butyl, pentyl, hexyl, heptyl or octyl radicals; unsaturated radicals such as vinyl or allyl; alicyclic radicals containing from 3 to 7 carbon atoms such as cyclopropyl, cyclobutyl, cyclopentyl, cyclohexyl or cycloheptyl radicals; or phenyl, benzyl, phenylethyl, tolyl, xylyl or naphthyl radicals.

4. Polysiloxazanes according to any one of Claims 1 to 3, characterized in that the $R_1$ and $R_2$ radicals represent a hydrogen atom or a methyl, ethyl, vinyl or phenyl radical and the $R_3$ and $R_4$ radicals represent a hydrogen atom.

5. Process for the preparation of the polysiloxazanes according to any one of Claims 1 to 4, characterized in that it consists in reacting:
   - at least one halosilane of formula:

     $(R_1)_a(R_2)_bSi(Y)_{4-(a+b)}$ (V)

   - with at least one hydrazine of formula:

     $NHR_3\text{-}NHR_4$ (VI)

     in which formulae the $R_1$, $R_2$ and $R_3$ and $R_4$ symbols have the meanings given in Claim 1, Y represents a halogen and especially a chlorine atom, and (a+b) represents a number between 0 and 3 inclusive and preferably approximately 2,
   - and with water.

6. Process according to Claim 5, characterized in that the halosilane is chosen from the group consisting of the products of formulae:
   $SiCl_4$, $(CH_3)_2SiCl_2$, $(CH_3)_3SiCl$
   $CH_3SiCl_3$, $(C_6H_5)_2SiCl_2$, $(C_6H_5)(CH_3)SiCl_2$
   $(C_6H_5)SiCl_3$, $(CH_3)(CH_3CH_2)SiCl_2$
   $(CH_3)_2HSiCl$, $HSiCl_3$
   $CH_3(CH_2=CH)SiCl_2$, $(CH_3)_2(CH_2=CH)SiCl$
   $(CH_3)HSiCl_2$

7. Process according to either of Claims 5 and 6, characterized in that the hydrazine is chosen from the group consisting of unsubstituted hydrazine ($N_2H_4$), methylhydrazine, ethylhydrazine, phenylhydrazine, cyclohexylhydrazine, 1,2-dimethylhydrazine, 1,2-diethylhydrazine, 1,2-diphenylhydrazine, 1,2-dibenzylhydrazine, $\alpha$-naphthylhydrazine, 1,2-diisopropylhydrazine, 1,2-ditolylhydrazines, 1,2-diisobutylhydrazine, (2,3-dimethylphenyl)hydrazine or 1,2-di($\alpha$-naphthyl)hydrazine.

8. Process according to any one of Claims 5 to 7, characterized in that the hydrazine VI and the water are used in amounts such that the number of moles of water added to the number of moles of hydrazine is greater than the number of moles of halogen atoms Y added to the number of moles of silicon atoms.

9. Process according to any one of Claims 5 to 8, characterized in that the reaction is carried out in the presence of a tertiary amine.

10. Process according to Claim 9, characterized in that the amount of amine is at least one molecule of amine per halogen atom Y and in that the number of moles of hydrazine added to the number of moles of water may be greater only than the number of moles of silicon atoms.

11. Process according to Claim 10, characterized in that 0.05 to 1 mol of water is used per mole of hydrazine VI.

12. Process according to any one of Claims 9 to 11, characterized in that the tertiary amine is chosen from the group consisting of triethylamine, trimethylamine, triphenylamine and pyridine.

13. Polysiloxazanes according to any one of Claims 1 to 4, characterized in that they are found in the form of shaped items such as fibres, filaments, powders, films, coatings, flakes, pipes, foams or woven or non-woven items or composite materials.

14. Process for the manufacture of ceramic items, characterized in that it consists in pyrolysing a polysiloxazane according to Claim 13 at a temperature of at least 700 ° C.

**Patentansprüche**

1. Polysiloxazane aus Einheiten der Formel:

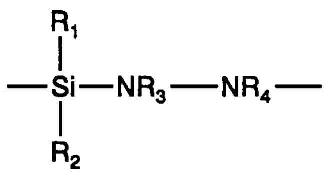

und / oder

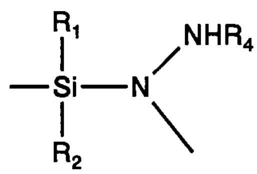

(I)

gebunden an Einheiten der Formel:

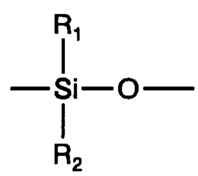

(II)

und gegebenenfalls an Einheiten der Formel:

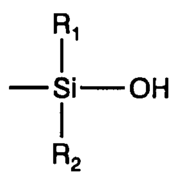

(III)

und gegebenenfalls an Einheiten der Formel:

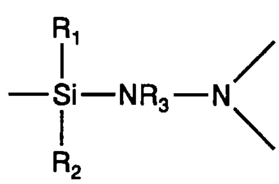

(IV)

wobei in den Formeln die Reste $R_1$ und $R_2$, $R_3$ und $R_4$ gleich oder verschieden sein können und ein Wasserstoffatom, einen gesättigten oder ungesättigten aliphatischen Kohlenwasserstoffrest oder einen mono- oder polycyclischen Aryl-, Alkylaryl- oder Arylalkylrest darstellen können, mit der Maßgabe, daß $R_1$ und $R_2$ nicht gleichzeitig ein Wasserstoffatom darstellen und daß sie ein Molekulargewicht von über 350 aufweisen, dadurch gekennzeichnet, daß das Verhältnis der Anzahl von Einheiten der Formel (I) zur Anzahl von Einheiten der Formel (II) größer 1 ist.

2. Polysiloxazane nach Anspruch 1, dadurch gekennzeichnet, daß ihr Molekulargewicht im Bereich von 400 bis 50.000 und vorzugsweise von 400 bis 10.000 liegt.

3. Polysiloxazane nach einem der Ansprüche 1 und 2, dadurch gekennzeichnet, daß die Symbole $R_1$, $R_2$, $R_3$ und $R_4$ einen Rest darstellen, der aus der Gruppe bestehend aus gesättigten aliphatischen Kohlenwasserstoffresten mit 1 bis 8 Kohlenstoffatomen, wie etwa den Methyl-, Ethyl-, Propyl-, Butyl-, Pentyl-, Hexyl-, Heptyl- oder Octylresten; ungesättigten Resten wie einem Vinyl- oder Allylrest; alicyclischen Resten mit 3 bis 7 Kohlenstoffatomen wie etwa den Cyclopropyl-, Cyclobutyl-, Cyclopentyl-, Cyclohexyl- oder Cycloheptylresten; und den Phenyl-, Benzyl-, Phenylethyl-, Toluyl-, Xylyl- oder Naphthylresten ausgewählt ist.

4. Polysiloxazane nach einem der Ansprüche 1 bis 3, dadurch gekennzeichnet, daß die Reste $R_1$ und $R_2$ ein Wasserstoffatom oder einen Methyl-, Ethyl-, Vinyl- oder Phenylrest darstellen und die Reste $R_3$ und $R_4$ ein Wasserstoffatom darstellen.

5. Verfahren zur Herstellung von Polysiloxazanen nach einem der Ansprüche 1 bis 4, gekennzeichnet durch die Reaktion von:
   - wenigstens einem Halogensilan der Formel:

     $(R_1)_a(R_2)_bSi(Y)_{4-(a+b)}$ (V)

   - mit wenigstens einem Hydrazin der Formel:

     $NHR_3{-}NHR_4$ (VI)

     wobei in den Formeln die Symbole $R_1$, $R_2$ sowie $R_3$ und $R_4$ die im Anspruch 1 angegebene Bedeutung haben, Y ein Halogenatom und insbesondere Chlor darstellt und (a + b) eine Zahl zwischen einschließlich 0 und 3 und vorzugsweise etwa 2 darstellt,
   - und mit Wasser.

6. Verfahren nach Anspruch 5, dadurch gekennzeichnet, daß das Halogensilan ausgewählt ist aus der Gruppe bestehend aus den Produkten der Formeln:
$SiCl_4$, $(CH_3)_2SiCl_2$, $(CH_3)_3SiCl$
$CH_3SiCl_3$, $(C_6H_5)_2SiCl_2$, $(C_6H_5)(CH_3)SiCl_2$
$(C_6H_5)SiCl_3$, $(CH_3)(CH_3CH_2)SiCl_2$
$(CH_3)_2HSiCl$, $HSiCl_3$
$CH_3(CH_2=CH)SiCl_2$, $(CH_3)_2(CH_2=CH)SiCl$
$(CH_3)HSiCl_2$

7. Verfahren nach einem der Ansprüche 5 und 6, dadurch gekennzeichnet, daß das Hydrazin ausgewählt ist aus der Gruppe bestehend aus nicht substituiertem Hydrazin ($N_2H_4$), Methylhydrazin, Ethylhydrazin, Phenylhydrazin, Cyclohexylhydrazin, 1,2-Dimethylhydrazin, 1,2-Diethylhydrazin, 1,2-Diphenylhydrazin, 1,2-Dibenzylhydrazin, $\alpha$-Naphthylhydrazin, 1,2-Di-isopropylhydrazin, 1,2-Ditoluylhydrazinen, 1,2-Di-isobutylhydrazin, 2,3-Dimethylphenylhydrazin, 1,2-Di($\alpha$-naphthyl)-hydrazin.

8. Verfahren nach einem der Ansprüche 5 bis 7, dadurch gekennzeichnet, daß das Hydrazin VI und Wasser in einer solchen Menge verwendet werden, daß die zur Molzahl Hydrazin zugegebene Molzahl Wasser größer ist, als die zur Molzahl Siliciumatomen zugegebene Molzahl Halogenatomen Y.

9. Verfahren nach einem der Ansprüche 5 bis 8, dadurch gekennzeichnet, daß die Reaktion in Gegenwart eines tertiären Amins durchgeführt wird.

10. Verfahren nach Anspruch 9, dadurch gekennzeichnet, daß die Aminmenge wenigstens aus einem Aminmolekül pro Halogenatom Y besteht und daß die zur Molzahl Wasser zugegebene Molzahl Hydrazin größer ist, als die Molzahl an Siliciumatomen allein.

11. Verfahren nach Anspruch 10, dadurch gekennzeichnet, daß 0,05 bis 1 Mol Wasser pro Mol Hydrazin VI verwendet werden.

12. Verfahren nach einem der Ansprüche 9 bis 11, dadurch gekennzeichnet, daß das tertiäre Amin ausgewählt ist aus der Gruppe bestehend aus Triethylamin, Trimethylamin, Triphenylamin und Pyridin.

**13.** Polysiloxazane nach einem der Ansprüche 1 bis 4, dadurch gekennzeichnet, daß sie als Formkörper wie Fasern, Filamente, Pulver, Filme, Überzüge, Partikel, Leitungen, Schäume oder gewebte und nicht gewebte Artikel oder Verbundmaterialien ausgebildet sind.

**14.** Herstellungsverfahren für Keramikartikel, dadurch gekennzeichnet, daß ein Polysiloxazan nach Anspruch 13 bei einer Temperatur von mindestens 700 °C pyrolisiert wird.